# EUROPÄISCHE PATENTSCHRIFT

(11) **EP 3 315 015 B1**
(45) Veröffentlichungstag und Bekanntmachung des Hinweises auf die Patenterteilung: **23.10.2019**
(21) Anmeldenummer: 17198282.0
(22) Anmeldetag: 25.10.2017
(51) Int. Cl.: A01F 15/08

(54) **RUNDBALLENPRESSE, KOMBINATION EINES LANDWIRTSCHAFTLICHEN FAHRZEUGS MIT EINER SOLCHEN UND VERFAHREN ZUM PRESSEN VON RUNDBALLEN**
ROUND BALER, COMBINATION OF AN AGRICULTURAL VEHICLE COMPRISING SUCH A DEVICE, AND METHOD FOR THE PRESSING OF ROUND BALES
PRESSE À BALLOTS RONDS, COMBINAISON D'UN VÉHICULE AGRICOLE AVEC UNE TELLE PRESSE À BALLOTS RONDS ET PROCÉDÉ DE PRESSAGE À BALLOTS RONDS

(30) Priorität: 26.10.2016 DE 102016221104
(43) Veröffentlichungstag der Anmeldung: 02.05.2018
(73) Patentinhaber: Deere & Company, Moline, IL 61265 (US)
(72) Erfinder: Roussel, David, 68163 Mannheim (DE); Mercier, Jean-Alexis, 68163 Mannheim (DE); Biziorek, Stephane, 68163 Mannheim (DE)
(74) Vertreter: Reichert, Christian

(56) Entgegenhaltungen:
- EP-A1- 1 397 954
- DE-U1-202014 003 633
- FR-A1- 3 021 492
- US-A- 4 702 066
- US-A- 5 182 987
- US-A1- 2013 032 047
- US-A1- 2016 264 358

## Beschreibung

Die Erfindung betrifft eine Rundballenpresse nach dem Oberbegriff des Anspruchs 1, sowie eine Kombination aus einem Fahrzeug und einer Rundballenpresse.

Rundballenpressen zum Pressen von landwirtschaftlichem Erntegut sind bekannt. Hierbei werden unter anderem Pressen mit variablem Ballenpressraum eingesetzt, in denen ein oder mehrere über Rollen geführte umlaufende Pressriemen einen Ballenpressraum in Umfangsrichtung eines zu pressenden Rundballens begrenzen. Rechte und linke Seitenwände der Rundballenpresse begrenzen den Ballenpressraum in Vorwärtsfahrtrichtung seitlich bzw. stirnseitig eines zu pressenden zylindrischen Rundballens. In der Regel werden Rundballenpressen von einem Zugfahrzeug, beispielsweise einem landwirtschaftlichen Schlepper, über einen Schwad von auf dem Boden abgelegtes, geschnittenes oder gemähtes Erntegut gezogen, wobei eine Aufnahme- und Zuführeinrichtung an der Rundballenpresse das Erntegut aufnimmt und in den Ballenpressraum fördert. Mit zunehmender Erntegutzufuhr bildet sich ein zylindrischer Rundballen, wobei je nach Beladung des Ballenpressraums unterschiedliche Umfangsgrößen des Rundballens erzielbar sind. Nachteilig stellt sich oftmals dar, das der oder die Pressriemen seitlich zu ihrer Umlaufrichtung auswandern bzw. driften, so dass zum einen unsymmetrische Rundballen entstehen können, zum anderen jedoch die Pressriemen an den Seitenwänden reiben bzw. entlangschleifen und unnötig verschleißen. Ein seitliches Auswandern wird in der Regel durch über die Breite der Rundballenpresse ungleichmäßig zugeführtes Erntegut verursacht, sei es, dass der auf dem Boden abgelegte Schwad ungleichmäßig angehäuft ist, und/oder die Rundballenpresse nicht mittig über den Schwad geführt wird. So wird dem Ballenpressraum auf einer Seite der Rundballenpresse mehr Erntegut zugeführt als auf der anderen Seite, was den oder die Pressriemen über die Breite des Ballenpressraums ungleichmäßig spannt. Dies verursacht schließlich ein seitliches Auswandern bzw. Driften des Pressriemens und lässt den Pressriemen im ungünstigsten Fall an die Seitenwände gelangen, an denen er dann entlangschleift, was zu verhindern ist. Ein Fahrer des Fahrzeugs könnte dem entgegenwirken, indem er die Rundballenpresse entsprechend gleichmäßig so über den Schwad führt, dass eine über die Breite der Rundballenpresse gleichmäßig verteilte Erntegutzufuhr erfolgt. Mangels fehlender Information für den Fahrer über die Gleichmäßigkeit der zugeführten Erntegutmenge stellt sich dies jedoch als schwierig dar.

Die US 5 182 987 A1 beschreibt eine Rundballenpresse variabler Größe mit einem einteiligen Pressriemen, dessen seitliche Position mittels eines Sensors erfasst wird, dessen Ausgangssignal zur Verstellung der Position einer Walze des Pressriemens dient. Der Sensor ist als Linearpotentiometer ausgeführt, das mit dem Riemen zusammenwirkt, oder als bewegliche Kontaktplatte, die einen Schalter betätigt, oder als Lichtschranke. Als nachteilig ist anzusehen, dass der Sensor dem Pressriemen und dem Erntegut relativ nahe benachbart angeordnet ist und somit verunreinigt und beschädigt werden kann.

Die DE 20 2014 003 633 U1 und die FR 3 021 492 A1 beschreiben ebenfalls Rundballenpressen mit Sensoren zur Erfassung der seitlichen Position des Pressriemens, die jedoch nicht näher erläutert werden.

Die US 2016/0264358 A1 beschreibt einen Fördergurt, dessen seitliche Position mittels an seiner Kante anliegender Rollen erfasst wird und in der US 4 702 066 werden die Räder einer Ballenpresse selbsttätig anhand der erfassten Riemenspannung gelenkt.

Die der Erfindung zugrunde liegende Aufgabe wird darin gesehen, ein oder mehrere der oben genannten Probleme zu überwinden. Insbesondere soll eine Rundballenpresse geschaffen werden, mit welcher eine möglichst gleichmäßige Erntegutzufuhr erfolgen kann, so das zum einen zylindrische Ballen gleichmäßig formbar und zum anderen der Verschleiß eines Pressriemens reduzierbar sind.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Eine Rundballenpresse der eingangs genannten Art ist derart ausgebildet, dass wenigstens ein mit dem Pressriemen mittelbar oder unmittelbar in Wirkverbindung stehender Sensor zur Erfassung einer Lageveränderung des Pressriemens in Richtung einer der Seitenwände vorgesehen ist. Dadurch, dass direkt eine Lageveränderung des Pressriemens erfassbar ist, kann direkt auf eine Lageveränderung des Riemens reagiert werden. Der Fahrer eines die Rundballenpresse führenden Fahrzeugs kann entsprechend einem Signal, welches von dem Sensor geliefert wird reagieren und eine gleichmäßige Zuführung von Erntegut erzielen. Ferner kann verhindert werden, dass der Pressriemen gegen eine der Seitenwände läuft und beschädigt wird bzw. zunehmend verschleißt.

Der Sensor wirkt mit einem Betätigungsglied zusammen, so dass der Sensor über das Betätigungsglied mit dem Pressriemen in Wirkverbindung steht. Dadurch können Bewegungen und damit verbundene Kräfte, die von dem Pressriemen ausgehen, nicht direkt auf den Sensor wirken, sondern werden von dem Betätigungsglied abgefangen bzw. aufgenommen. Dies steigert die Robustheit und minimiert die Anfälligkeit einer solchen Sensoranordnung.

Der Sensor ist als Drehwinkelsensor oder Wegesensor ausgebildet.

Das Betätigungsglied wird mit einer umlaufenden Kante des Pressriemens mittelbar oder unmittelbar in Eingriff gebracht bzw. steht mit dieser in Verbindung. Sollte der Pressriemen zu einer Seite auswandern bzw. driften, wirkt sich dies direkt auf das Betätigungsglied aus, welches eine der Lageveränderung des Pressriemens entsprechende Auslenkung bzw. Betätigung erfährt. Letztere wird durch den Sensor erfasst, wobei die Auslenkung des Betätigungsglieds direkt auf die Lageveränderung des Pressriemens schließen lässt.

Das Betätigungsglied ist an einem Rahmenteil der Rundballenpresse gelagert, so dass die Lageveränderung des Pressriemens relativ zum Rahmen der Rundballenpresse bzw. relativ zu den Seitenwänden erfasst wird.

Das Betätigungsglied umfasst eine Führungsrolle, die auf der umlaufenden Kante des Pressriemens abrollt. Die Führungsrolle dient zum einen als Führungselement für den Pressriemen zum anderen minimiert sie Reibungsverluste zwischen dem Betätigungsglied und der umlaufenden Kante des Pressriemens. Die Führungsrolle ist vorzugsweise mit einer Führungsnut versehen, in der die umlaufende Kante geführt bzw. aufgenommen ist.

Das Betätigungsglied kann einen Schwenkarm umfassen, der schwenkbar am Rahmen gelagert ist, wobei an seinem schwenkbaren freien Ende die Führungsrolle angeordnet ist. Der Schwenkarm ist an seinem am Rahmen gelagerten Ende um eine Schwenkachse schwenkbar, wobei ein Drehwinkelsensor die Schwenkbewegung erfasst und dadurch die Lageveränderung relativ zum Rahmen der Rundballenpresse bzw. relativ zu den Seitenwänden erfasst werden kann, wobei der Schwenkwinkel des Betätigungsglieds direkt mit der Lageveränderung des Pressriemens in Richtung der Seitenwände zusammenhängt bzw. die Lageveränderung des Pressriemens direkt vom Schwenkwinkel ableitbar ist.

In einer alternativen Ausführungsform umfasst das Betätigungsglied einen in Richtung der Seitenwände linear verschiebbaren Schieber und die Führungsrolle ist an einem freien Ende des Schiebers angeordnet. Das als Schieber ausgebildete Betätigungsglied ist am Rahmen befestigt, wobei der Schieber in einer Führungsschiene oder Führungsnut geführt ist oder in Form eines Teleskopstabes oder dergleichen ausgebildet sein kann.

Das Betätigungsglied wird gegen einen Anschlag bewegt bzw. geführt, so dass der Bewegungsspielraum des Bewegungsglieds beschränkt wird. Dies führt dazu, dass auch die Lageveränderung des Pressriemens begrenzt wird und verhindert werden kann, dass der Pressriemen an eine der Seitenwände fahren bzw. gelangen kann. Die Anschläge sind als Enden einer kreisbogenförmigen oder linear ausgebildeten Führungsnut in dem als Querträger ausgeführten Rahmenteil ausgeführt, durch die sich der eine den Schwenkarm mit der Führungsrolle verbindende Führungsachse oder ein Führungsbolzen, über welchen der Schieber in der Führungsnut geführt ist, hindurch erstreckt und in seinen Extremstellungen anliegt, wobei der Sensor auf der dem Pressriemen abgewandten Seite des Querträgers angeordnet ist,

Das Betätigungsglied ist vorzugsweise durch eine in Richtung des Pressriemens wirkende Vorspanneinrichtung vorgespannt, so dass das Betätigungsglied bzw. die dort angeordnete Führungsrolle oder der Führungsschlitten bzw. Führungsschuh gegen den Pressriemen bzw. gegen die umlaufende Kante des Pressriemens gedrückt wird und mit diesem in Kontakt steht.

Die oben beschriebene Rundballenpresse kann in Kombination mit einem landwirtschaftlichen Fahrzeug betrieben werden. Vorzugsweise wird das vom Sensor gelieferte Signal in einer geeigneten Anzeigeeinrichtung im Fahrzeug sichtbar und/oder hörbar dem Fahrer angezeigt. So kann das Signal beispielsweise als Zahlenwert oder auch als Grafik dargestellt werden bzw. der Fahrer über Alarmtöne informiert werden, wenn eine Lageveränderung des Pressriemens eintritt.

Ferner ist es möglich, dass ein vom Sensor geliefertes Signal eine Stellgröße für eine in Abhängigkeit des Signals automatisch arbeitende Lenkeinrichtung für das Fahrzeug darstellt. Das Fahrzeug kann dazu mit einer automatischen Lenkeinrichtung ausgestattet sein, wie es heute im Rahmen von durch globale Positioniersysteme angesteuerte Lenksysteme bekannt ist. Ein vom Sensor ausgehendes Signal kann im automatisch arbeitenden Lenksystem von einer Steuereinheit als Steuersignal dienen und das Fahrzeug derart automatisch gelenkt werden, dass der Schwad optimal abgefahren wird, so dass einer Lageveränderung des Pressriemens automatisch entgegengewirkt wird und der Fahrer selbst nicht mehr einschreiten braucht.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Seitenansicht einer Kombination aus landwirtschaftlichem Fahrzeug und Rundballenpresse,
- Fig. 2: eine schematische Seitenansicht einer Rundballenpresse mit dargestellter Führung eines umlaufenden Pressriemens und Sensoreinrichtung,
- Fig. 3: eine schematische Perspektivansicht der Pressriemenanordnung mit Sensoreinrichtung der Rundballenpresse aus Figur 2,
- Fig. 4: eine schematische Seitenansicht der Pressriemenanordnung mit Sensoreinrichtung der Rundballenpresse aus Figuren 2 und 3,
- Fig. 5: eine schematische Ansicht einer in Vorwärtsfahrtrichtung vorderen Seite der Pressriemenanordnung mit Sensoreinrichtung der Rundballenpresse aus Figuren 2 bis 4,
- Fig. 6: eine schematische Ansicht einer in Vorwärtsfahrtrichtung vorderen Seite der Sensoreinrichtung aus Figuren 2 bis 5 in einer Normallage des Pressriemens,
- Fig. 7: eine schematische Ansicht einer in Vorwärtsfahrtrichtung vorderen Seite der Sensoreinrichtung aus Figuren 2 bis 6 in einer Seitenlage des Pressriemens,
- Fig. 8: eine schematische Ansicht einer in Vorwärtsfahrtrichtung vorderen Seite eines linken Teils der Sensoreinrichtung aus Figuren 2 bis 7 in einer Normallage des Pressriemens,
- Fig. 9: eine schematische Ansicht einer in Vorwärtsfahrtrichtung vorderen Seite des linken Teils der Sensoreinrichtung aus Figuren 2 bis 8,
- Fig. 10: eine schematische Perspektivansicht einer in Vorwärtsfahrtrichtung rückwärtigen Seite der Sensoreinrichtung aus Figuren 2 bis 9,
- Fig. 11: eine schematische Perspektivansicht einer in Vorwärtsfahrtrichtung vordere Seite der Sensoreinrichtung aus Figuren 2 bis 10 und
- Fig. 12: eine schematische Ansicht einer in Vorwärtsfahrtrichtung hinteren Seite einer Sensoreinrichtung für ein alternatives Ausführungsbeispiel in einer Normallage des Pressriemens

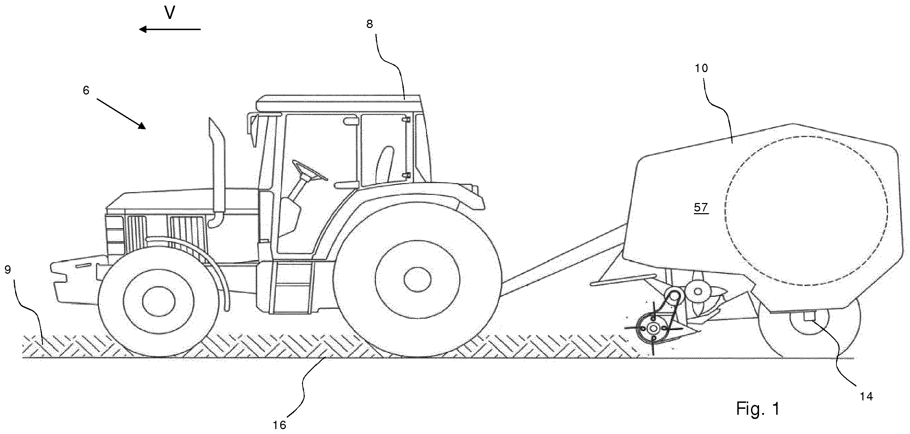

In der Fig. 1 ist eine Ausführungsform einer Kombination 6 eines landwirtschaftlichen Fahrzeugs 8, in Form eines Ackerschleppers oder Traktors, und einer Rundballenpresse 10 dargestellt, wobei die Rundballenpresse 10 mittels einer Aufnahmevorrichtung 22 auf dem Boden 16 in einem Schwad 9 abgelegtes Erntegut aufnimmt.

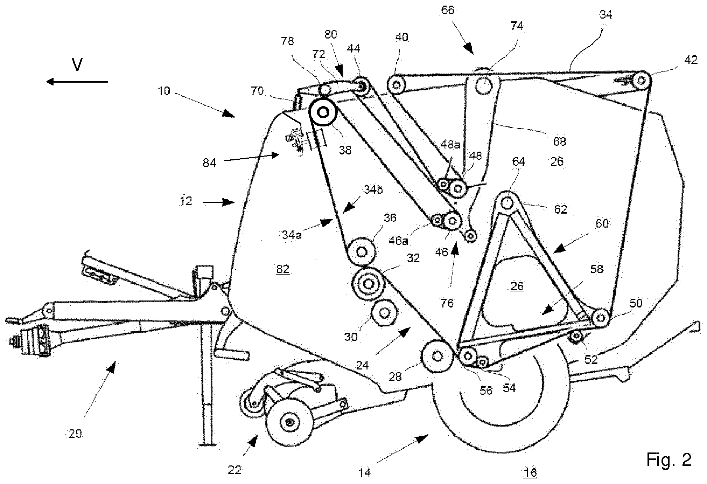

Wie in Figur 2 im weiteren Detail abgebildet ist umfasst die Rundballenpresse 10 einen Rahmen 12, der sich über ein Fahrwerk 14 auf dem Boden 16 abstützt. Die gezeigte Rundballenpresse 10 ist in der Art einer Rundballenpresse ausgebildet und kann sowohl im landwirtschaftlichen als auch im industriellen Bereich zur Herstellung eines üblicherweise als Rundballen bezeichneten, insbesondere rundzylindrischen Ballens aus Erntegut, aber auch aus Müll, Papier, Stoff bzw. Gewebe, Baumwolle, Tabak etc. eingesetzt werden. Eine solche Rundballenpresse 10 kann von dem Fahrzeug 8 gezogen werden oder auch selbstfahrend ausgebildet sein.

Gemäß dem vorliegenden Ausführungsbeispiel ist an der in Vorwärtsfahrtrichtung (V) vorderen Seite des Rahmens 12 eine Deichsel 20 vorgesehen, um die Rundballenpresse 10 an dem Fahrzeug 8 anhängen und über ein Feld ziehen zu können. Eine Aufnahmevorrichtung 22 in Form einer "Pick-Up" dient zur Aufnahme von auf dem Boden 16 liegenden Erntegut, z. B. von in einem Schwad 9 abgelegtes Heu oder Stroh. Das von der Aufnahmevorrichtung 22 aufgenommene Erntegut wird einem Einlass 24 einem Ballenpressraums 26 zugeführt und dort spiralförmig zu einem rundzylindrischen Ballen aufgerollt, gebunden und anschließend auf dem Boden 16 abgelegt.

Am Einlass 24 des Ballenpressraums 26 sind eine untere, stationäre Rolle 28 und zwei obere Rollen 30, 32 positioniert. Der Ballenpressraum 26 wird weiterhin durch ein endloses Pressmittel gebildet, das gemäß der vorliegenden Ausführungsform in der Art zweier nebeneinander anliegender Pressriemen 34 ausgeführt ist und um eine Anzahl von ortsfesten Walzen 36, 38, 40, 42 und bewegbaren Walzen 44 , 42, 46, 48, 50, 52, 54, 56 geführt wird. Die Pressriemen 34 weist eine dem Rahmen 12 zugewandte Außenseite 34a und eine Innenseite 34b auf.

Während der Ballenpressraum 26 umfangsseitig im Wesentlichen von dem Pressriemen 34 und den Rollen 28, 30 und 32 umgeben wird, wird er seitlich von Seitenwänden 57 begrenzt, wobei in Figur 1 nur die in Vorwärtsfahrtrichtung V linke Seitenwand 57 dargestellt ist.

Vier Walzen 50, 52, 54, 56 der bewegbaren Walzen 44 - 56 sind in einem unteren Bereich 58 eines deltaförmigen Trägers 60 frei drehbar gelagert, der um seine obere Spitze 62 um eine horizontal und quer zur Vorwärtsfahrtrichtung V verlaufende Achse 64 schwenkbar angelenkt ist und mit einem Aktor (nicht gezeigt) aus der in Fig. 1 dargestellten Ballenbildungsposition in eine nach hinten und oben verschwenkte Ballenauswurfposition verbringbar ist.

Ein Spannmechanismus 66 zur Straffung des Pressriemens 34 weist einen Spannhebel 68, der mit einem nicht gezeigten ersten Spannelement zusammenwirkt, und einen mit einem zweiten Spannelement 70 zusammenwirkenden Spannarm 72 auf. Sowohl das nicht gezeigte Spannelement als auch das Spannelement 72 kann in üblicher Weise als eine mechanische Feder oder als ein Hydraulikmotor ausgebildet sein und/oder einen solchen aufweisen.

Der Spannhebel 68 ist im Bereich der Seitenwände 57 um eine horizontal und quer zur Vorwärtsrichtung verlaufende Achse 74 gelagert und trägt in einem der Achse 74 abgewandten Endbereich 76 zwei der bewegbaren Rollen 46, 48 sowie diesen Rollen 46, 48 zugeordnete Reinigungsrollen 46a, 48a. Der Spannarm 72 ist entsprechend um eine Achse 78 gelagert und trägt in einem Endbereich 80 eine der bewegbaren Rollen 44. Darüber hinaus ist der Spannarm 68 mit dem Spannelement 70 einenends wirksam verbunden, das andernends mit der Rundballenpresse 10 bzw. deren Rahmen 12 in nicht gezeigter Weise verbunden ist.

Die Pressriemen 34 werden mittels des Spannarms 70 stets so fest an die drehend angetriebene, ortsfeste Walze 38 angelegt, dass ihre Mitnahme gewährleistet ist. Auch die Walze 36 wird drehend angetrieben. Die Pressriemen 34 nehmen einen Anfangszustand ein, in dem sie gerade gestreckt den Einlass 24 überbrücken, und einen Endzustand, in dem sie sich wie eine große Schlaufe um einen Ballen schlingen. Der Ballenpressraum 26 ist somit in seiner Größe veränderlich, d. h. sein Durchmesser nimmt mit der Größe des Ballens 18 zu. Der Ballen befindet sich während seiner Bildung in dem Ballenpressraum 26 und wird von den Pressriemen 34 größtenteils umschlungen, fällt aber aus dem Ballenpressraum 26 nach hinten auf den Boden 16, sobald der Träger 60 mit den beweglichen Walzen 50 - 56 mit Blick auf die Zeichnung entgegen dem Uhrzeigerdrehsinn nach oben schwenkt. Alternativ kann der Ballen auch auf einem der Rundballenpresse 10 nachgeordneten Gerät, beispielsweise in der Art eines Geräts zur Umhüllung des Ballens mit einem Netz- oder Folienmaterial abgelegt werden.

Die dargestellte Ausführungsform der Rundballenpresse ist in der EP 1 308 078 A1 detailliert offenbart. Andere, mögliche Ausführungsformen sind in der DE 198 51 470 A1, DE 102 41 215 A1 und der EP 1 264 531 A1 beschrieben. Die Offenbarungen dieser Dokumente werden durch Verweis mit in die vorliegenden Unterlagen aufgenommen.

In einem der Deichsel 20 zugewandten Bereich 82 der Rundballenpresse 10 ist eine Sensoreinrichtung 84 vorgesehen, um eine Lageveränderung direkt an den Pressriemen 34 zu erfassen. Die Sensoreinrichtung 84 weist einen Querträger 86 ausgebildeten Rahmenteil auf, der sich über die gesamte Breite auf der in Vorwärtsfahrtrichtung V vorderen Seite der Rundballenpresse 10 zwischen den Seitenwänden 57 erstreckt und am Rahmen 12 befestigt, beispielsweise mit diesem verschraubt oder verschweißt ist.

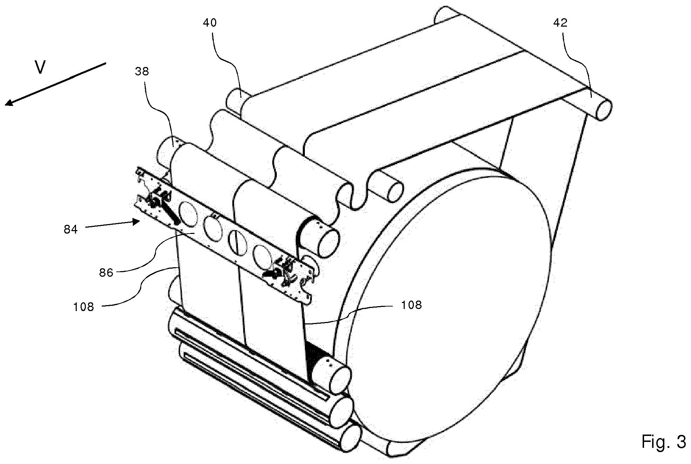

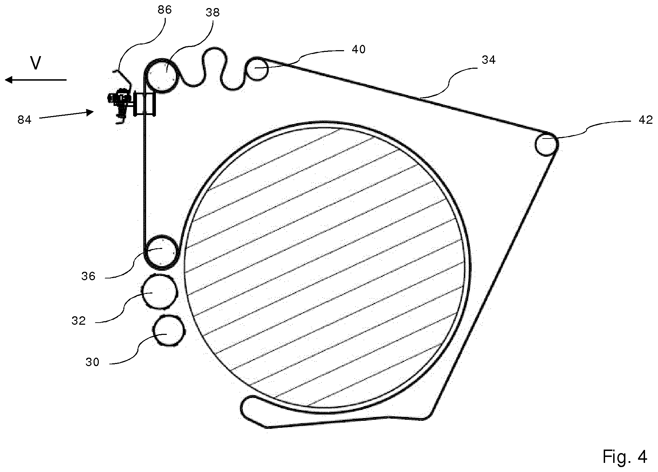

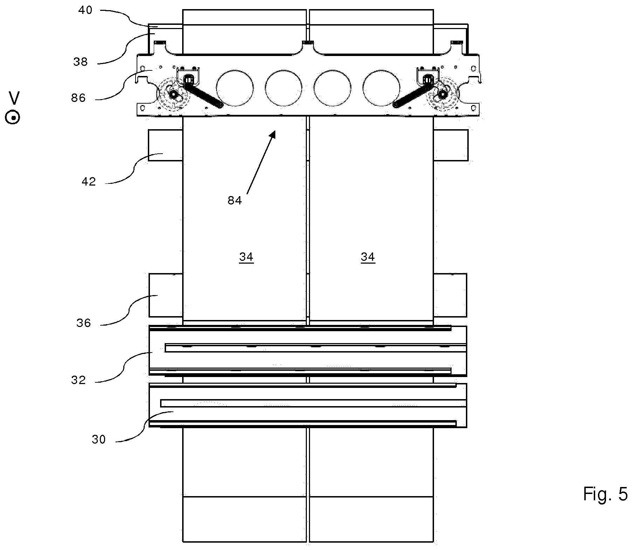

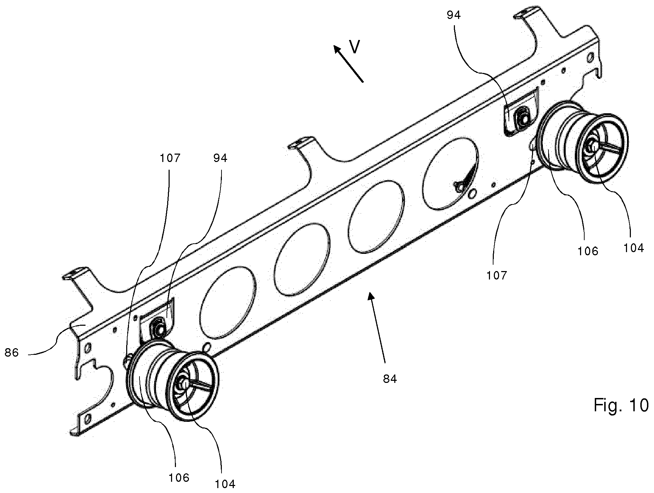

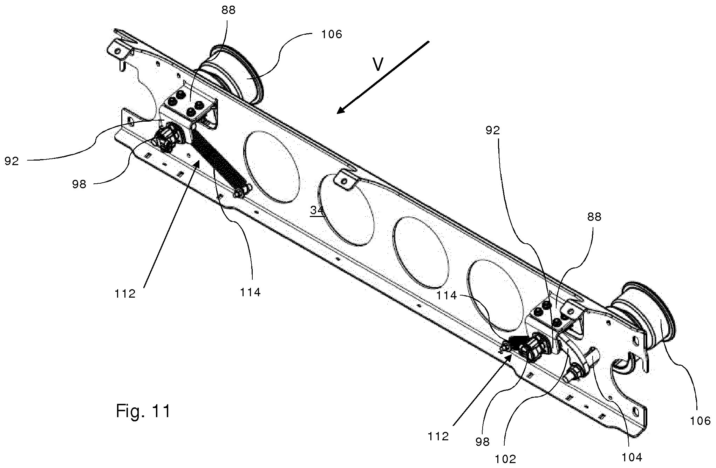

Es wird nun auch auf die Figuren 3 bis 11 Bezug genommen, in denen die Sensorvorrichtung 84 genauer dargestellt wird.

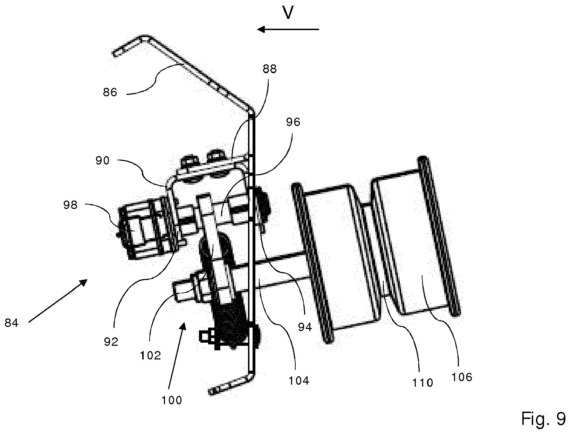

Wie in den Figuren 3 - 5 zu sehen ist, erstreckt sich der Querträger 86 in einem oberen Teil des vorderen, der Deichsel 20 zugewandten Bereichs 82 der Rundballenpresse, wobei der Querträger 86 so angeordnet ist, dass die Pressriemen 34 zwischen dem Querträger 86 und der Walze 38, also auf der in Vorwärtsfahrtrichtung V rückwärtigen Seite des Querträgers 86 verlaufen. Der Querträger 86 ist als profiliertes Blech ausgebildet, um eine gewisse Steifigkeit bereitzustellen. Auf der rechten und linken Seite des Querträgers 86 ist in seitlicher Lage zu den den Seitenwänden 57 zugewandten Randbereichen der Pressriemen 34, und in Vorwärtsfahrtrichtung V vorderseitig, jeweils eine Befestigungslasche 88 vorgesehen (siehe Figur 9). An der Befestigungslasche 88 ist jeweils ein u-förmig gebogene Sensorhalterung 90 mit zwei sich nach unten erstreckenden Schenkeln 92, 94 angeschraubt. Zwischen den Schenkeln 92, 94 der Sensorhalterung 90 erstreckt sich im Wesentlichen senkrecht zur Oberfläche der Pressriemen 34 jeweils ein Schwenkbolzen 96, der an den jeweiligen Schenkeln 92, 94 drehbar gelagert ist. An der den Pressriemen 34 abgewandten Seite der Schwenkbolzen 96 ist jeweils ein Drehwinkelsensor 98 angeordnet.

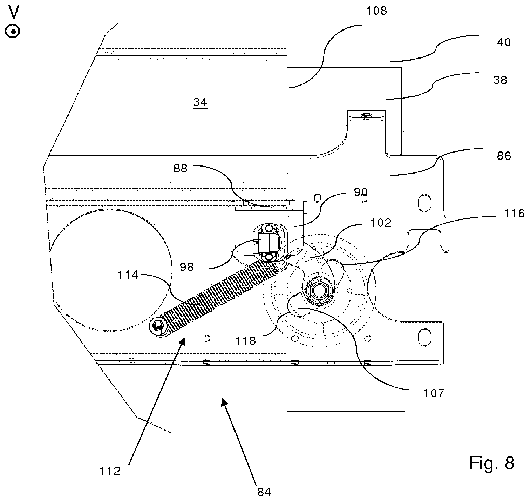

Der Schwenkbolzen 96 ist drehfest mit einem Betätigungsglied 100 verbunden, wobei das Betätigungsglied 100 einen Schwenkarm 102 umfasst, der einenends drehfest mit dem Schwenkbolzen 96 verbundenen ist. Ferner umfasst das Betätigungsglied 100 eine Führungsachse 104 und eine Führungsrolle 106, wobei die Führungsachse 104 auf der in Vorwärtsfahrtrichtung vorderen Seite des Querträgers 86 anderenends des Schwenkarms 102 befestigt ist und die Führungsrolle 106 drehbar haltert. Wie in Figur 9 zu erkennen ist, erstreckt sich die Führungsachse 104 vom Schwenkarm 102 ausgehend durch den Querträger 86 hindurch und wird in einer im Querträger 86 kreisbogenförmig ausgebildeten Führungsnut 107 quer zu seiner Längsachse geführt, wie insbesondere in Figur 8 gut zu erkennen ist.

Auf der in Vorwärtsfahrtrichtung rückwärtigen Seite des Querträgers 86 ist die Führungsrolle 106 drehbar am freien Ende der Führungsachse 104 gelagert. Die seitliche Anordnung und die jeweiligen Maße für die Befestigungslasche 88 am Querträger 86, für die Sensorhalterung 90 und für das Betätigungsglied 100 sind derart vorgesehen, dass die jeweiligen Führungsrollen 106 mit jeweils einer den Seitenwänden 57 zugewandten umlaufenden Kante 108 der Pressriemen 34 in Eingriff stehen, wobei an den Führungsrollen 106 eine ringförmige Führungsnut 110 ausgebildet ist, in der der Pressriemen 34 jeweils geführt wird und mit welcher sich die Führungsrolle 106 auf der Kante 108 des jeweiligen Pressriemens 34 abrollt.

Um einen gewissen Anpressdruck der Führungsrolle 106 auf die Kante des Pressriemens 34 auszuüben, ist eine Vorspanneinrichtung 112 vorgesehen, wobei die Vorspanneinrichtung 112 eine Zugfeder 114 umfasst, die einenends am Schwenkarm 102, zwischen Schwenkbolzen 96 und Führungsachse 104, und anderenends am Querträger 86 befestigt ist, derart, dass eine Vorspannung des Schwenkarms 102 in Richtung des Pressriemens 34 erfolgt.

Die Sensorvorrichtung 84 weist ferner für den Schwenkarm 102 einen ersten Anschlag 116, der durch ein der jeweiligen Seitenwand 57 zugewandtes Ende der kreisbogenförmigen Führungsnut 107 ausgebildet wird, und einen zweiten Anschlag 118 auf, der durch ein der jeweiligen Seitenwand 57 abgewandtes Ende der kreisbogenförmigen Führungsnut 107 ausgebildet wird. Durch die Anschläge 116, 118 wird eine Lagerveränderung der Pressriemen 34 in Richtung der Seitenwände 57 begrenzt, wobei die Schwenkarme 102 mit Erreichen der Anschläge 116, 118 jeweils eine Extremstellung einnehmen und eine weitergehende Lageveränderung des Pressriemens 34 in Richtung der Seitenwände 57 verhindert bzw. blockiert wird. Dadurch kann wirksam verhindert werden, dass der Pressriemen 34 mit seiner umlaufenden Kante 108 in Berührung mit den Seitenwänden 57 gelangt und unnötig verschleißt bzw. sogar beschädigt wird.

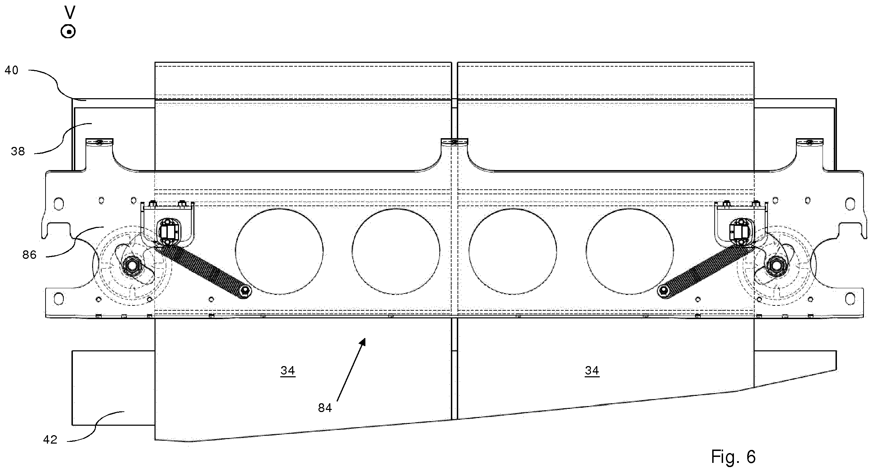

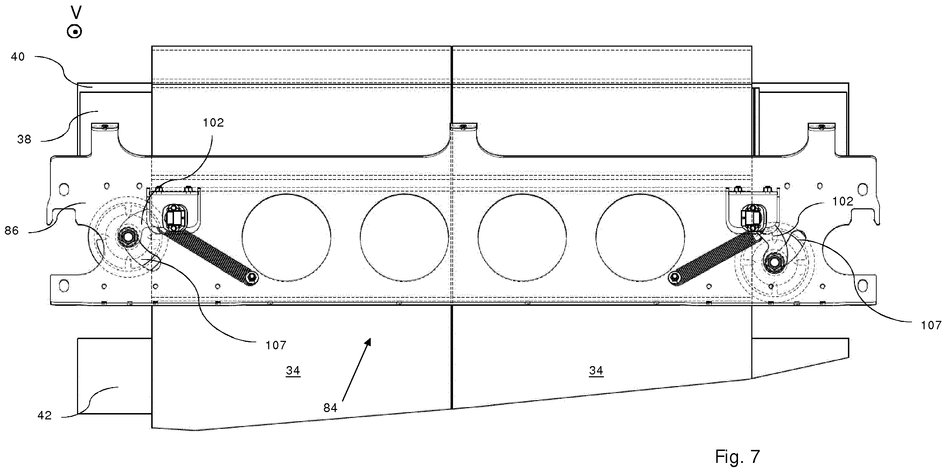

Bei einer Lageveränderung der Pressriemen in Richtung der Seitenwände 57 erfolgt durch das in Eingriffstehen der umlaufenden Kanten 108 mit den Führungsrollen 106 eine Schwenkbewegung des Schwenkhebels, wie es ein Vergleich der Figuren 6 und 7 zeigt. Figur 6 zeigt eine Normallage des Pressriemens, in welcher der oder die Pressriemen 34 zentriert zwischen den Seitenwänden 57 angeordnet liegen und der Schwenkarm 102 auf beiden Seiten des Querträgers 86 auf einer mittleren Position in der jeweiligen kreisbogenförmigen Führungsnut 107 geführt wird. Figur 7 hingegen zeigt eine Seitenlage des Pressriemens 34, in welcher der oder die Pressriemen 34 seitlich ausgewandert bzw. gedriftet sind und die Normallage in Richtung der in Vorwärtsfahrtrichtung rechten Seitenwand verlassen haben, wobei der Schwenkarm 102 auf der in Vorwärtsfahrtrichtung rechten Seite des Querträgers 86 an den Anschlag 116 und der Schwenkarm 102 auf der in Vorwärtsfahrtrichtung linken Seite des Querträgers 86 an den Anschlag 118 anschlägt. Für eine Lageveränderung in die entgegengesetzte Richtung stellt sich eine entsprechende Situation mit umgekehrter Anschlagspaarung ein. Die bei einer Lageveränderung des Pressriemens 34 von den Schwenkarmen 102 ausgeführte Schwenkbewegung wird von dem Drehwinkelsensor 98 erfasst und an eine Signalverarbeitungseinheit (nicht dargestellt) am Fahrzeug oder an der Rundballenpresse geleitet. Von dort gelangt das Sensorsignal auf den Fachmann bekannte Weise an eine Anzeigeeinheit (nicht dargestellt) im Fahrzeug 8 und kann dort visuell oder auditiv zur Anzeige gebracht werden. Ferner ermöglicht eine entsprechende Signalverarbeitung auch die Anwendung in automatischen Lenkungssystemen, so dass in Abhängigkeit des oder der Sensorsignale eine Fahrzeuglenkung eingeleitet wird, die der Lageveränderung des Pressriemens 34 entgegenwirkt. Derartige Lenksystem oder (Fahrzeug-)Steuersysteme sind bereits ausführlich bekannt und werden in Verbindung mit globalen Positioniersystemen (GPS) und/oder mit Kartierungssystemen zur autonomen Steuerung von landwirtschaftlichen Fahrzeugen bereits eingesetzt. Die Umsetzung und Ausgestaltung der Erfindung zur Nutzung des hier gelieferten Sensorsignals für eine autonome Lenkung bzw. Steuerung des Fahrzeugs 8 liegt im Bereich des Allgemeinwissens des Fachmanns und bedarf keiner detaillierteren Ausführung.

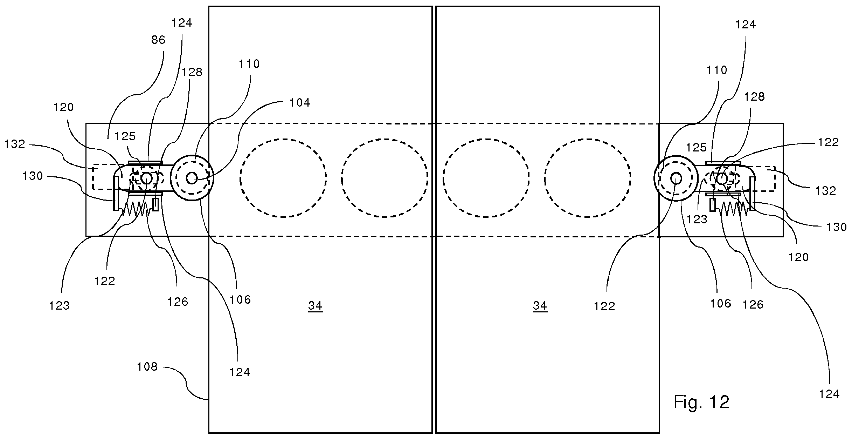

Ein alternatives Ausführungsbeispiel ist in Figur 12 dargestellt, welches sich dadurch kennzeichnet, dass an Stelle der Schwenkarme 106 sich linear bewegende Schieber 120 (oder Schlitten) angeordnet sind, die über einen Führungsbolzen 122 in einer linear ausgebildeten Führungsnut 123 geführt sind. Der Schieber 120 wird ferner über zwei am Querträger 86 parallel ausgebildete Führungsschienen 124 sowie über eine mit dem Führungsbolzen verbundene Führungsscheibe 125 geführt. Die Führungsrollen 106 sind an dem Schieber 120 befestigt und stehen mit der jeweiligen umlaufenden Kante 108 im Eingriff, wie oben beschrieben. Eine Zugfeder 126 erstreckt sich zwischen einer Halterung 128 am Querträger 86 und einer Halterung 130 am Schieber 120 und dient als Vorspanneinrichtung. Ein Wegesensor 132 ist mit dem Führungsbolzen 122 verbunden und liefert bei einer Verschiebung des Schiebers 120 aufgrund einer Lageveränderung der Pressriemen 34 ein Signal, welches proportional zu der Lageveränderung der Pressriemen 34 ist. Auch die hier linear ausgebildeten Führungsnuten 124 bilden mit ihren Enden Anschläge, die mit den oben beschriebenen Anschlägen 116 und 118 vergleichbar sind, wobei hier der jeweilige Führungsbolzen 122 an ein Ende der Führungsnut 124 anschlägt und eine weitergehende Lageveränderung des Pressriemens 34 verhindert bzw. blockiert. Im Übrigen kann auf die Ausführungen zum vorangehenden Ausführungsbeispiel verwiesen werden.

## Patentansprüche

1. Rundballenpresse (10) mit:
einem variablen Ballenpressraum (26), wobei der variable Ballenpressraum (26) durch in Vorwärtsfahrtrichtung (V) rechts und links angeordnete Seitenwände (57) und wenigstens einen zwischen den Seitenwänden (57) umlaufenden Pressriemen (34) begrenzt wird, und
wenigstens einem mit dem Pressriemen (34) mittelbar oder unmittelbar in Wirkverbindung stehenden, als Drehwinkelsensor oder Wegesensor ausgebildeten Sensor (98, 132) zur Erfassung einer Lageveränderung des Pressriemens (34) in Richtung einer der Seitenwände (57),
wobei wenigstens ein Betätigungsglied (100) in Form eines Schwenkarms (102) oder linear verschiebbaren Schiebers (120) angeordnet ist, über das der Sensor (98, 132) mit dem Pressriemen (34) in Wirkverbindung steht und welches mit dem Sensor (98, 132) zusammenwirkt,
das an einem Rahmenteil der Rundballenpresse (10) gelagerte Betätigungsglied (100) mit einer umlaufenden Kante (108) des Pressriemens (34) mittelbar oder unmittelbar in Eingriff bringbar ist,
und durch eine Lageveränderung des Pressriemens (34) eine durch den Sensor (98, 132) erfassbare Verstellung des Betätigungsglieds (100) erzeugbar ist,
**dadurch gekennzeichnet, dass** das Betätigungsglied (100) eine Führungsrolle (106) umfasst, welche auf der umlaufenden Kante (108) abrollbar ist und an einem schwenkbaren, freien Ende des Schwenkarms (102) oder verschiebbaren, freien Ende des Schiebers (120) angeordnet ist,
und dass das Betätigungsglied (100) gegen einen ersten Anschlag (116) und einen zweiten Anschlag (118) bewegbar ist, welche Anschläge (116, 118) als Enden einer kreisbogenförmigen oder linear ausgebildeten Führungsnut (107, 123) in dem als Querträger (86) ausgeführten Rahmenteil ausgeführt sind, durch die sich der eine den Schwenkarm (102) mit der Führungsrolle (106) verbindende Führungsachse (104) oder ein Führungsbolzen (122), über welchen der Schieber (120) in der Führungsnut (123) geführt ist, hindurch erstreckt und in seinen Extremstellungen anliegt, wobei der Sensor (98, 132) auf der dem Pressriemen (34) abgewandten Seite des Querträgers (86) angeordnet ist.

2. Rundballenpresse (10) nach Anspruch 1, **dadurch gekennzeichnet, dass** das Betätigungsglied (100) eine in Richtung des Pressriemens (34) wirkende Vorspanneinrichtung (112) umfasst, wobei das Betätigungsglied (100) in Richtung des Pressriemens (34) vorspannbar ist.

3. Kombination aus einem landwirtschaftlichen Fahrzeug (8) und einer Rundballenpresse (10) nach einem der vorgehenden Ansprüche 1 oder 2.

4. Kombination nach Anspruch 3, mit einer Anzeigeeinrichtung, mittels welcher ein vom Sensor (98, 132) lieferbares Signal im Fahrzeug (8) sichtbar und/oder hörbar anzeigbar ist.

5. Kombination nach Anspruch 3 oder 4, **dadurch gekennzeichnet, dass** ein vom Sensor (98, 132) lieferbares Signal eine Stellgröße für eine in Abhängigkeit des Signals automatisch arbeitende Lenkeinrichtung für das Fahrzeug darstellt.

## Claims

1. Roundbaler (10) having:
a variable bale-pressing chamber (26), wherein the variable bale-pressing chamber (26) is delimited by side walls (57), which are arranged to the right and left in the direction of forward travel (V), and at least one pressing belt (34) running around between the side walls (57), and
at least one sensor (98, 132) which is designed as an angle of rotation sensor or displacement sensor, is in direct or indirect operative connection with the pressing belt (34) and is intended to detect a positional change of the pressing belt (34) in the direction of one of the side walls (57),
wherein at least one actuating member (100) in the form of a pivoting arm (102) or linearly displaceable slide (120) is arranged, via which the sensor (98, 132) is in operative connection with the pressing belt (34) and which interacts with the sensor (98, 132),
the actuating member (100), which is mounted on a frame part of the roundbaler (10), can be brought directly or indirectly into engagement with a peripheral edge (108) of the pressing belt (34),
and an adjustment of the actuating member (100) that can be detected by the sensor (98, 132) can be produced by a positional change of the pressing belt (34),
**characterized in that** the actuating member (100) comprises a guide roller (106) which can roll on the peripheral edge (108) and is arranged on a pivotable, free end of the pivoting arm (102) or displaceable, free end of the slide (120),
and **in that** the actuating member (100) can be moved against a first stop (116) and a second stop (118), which stops (116, 118) are configured as ends of a circular arc-shaped or linearly formed guide groove (107, 123) in the frame part, which is configured as a crossmember (86), through which groove the one guide pin (104), which connects the pivoting arm (102) to the guide roller (106), or a guide bolt (122), via which the slide (120) is guided in the guide groove (123), extends and bears in its end positions, wherein the sensor (98, 132) is arranged on the side of the crossmember (86) facing away from the pressing belt (34).

2. Roundbaler (10) according to Claim 1, **characterized in that** the actuating member (100) comprises a preloading device (112) which acts in the direction of the pressing belt (34), wherein the actuating member (100) can be preloaded in the direction of the pressing belt (34).

3. Combination of an agricultural vehicle (8) and a roundbaler (10) according to one of the preceding Claims 1 or 2.

4. Combination according to Claim 3, having an indicating device by means of which a signal which can be delivered by the sensor (98, 132) can be visibly and/or audibly indicated in the vehicle (8).

5. Combination according to Claim 3 or 4, **characterized in that** a signal which can be delivered by the sensor (98, 132) constitutes a manipulated variable for a guiding device for the vehicle, said guiding device operating automatically in dependence on the signal.

## Revendications

1. Presse à balles rondes (10) comprenant :
une chambre de compression de balle variable (26), la chambre de compression de balle variable (26) étant délimitée par des parois latérales (57) disposées à gauche et à droite par référence à la direction d'avancement (V) et par au moins une courroie de presse (34) en circulation entre les parois latérales (57), et
au moins un capteur (98, 132) qui est en liaison fonctionnelle directe ou indirecte avec la courroie de presse (34), qui est conçu comme un capteur d'angle de rotation ou un capteur de déplacement et qui est destiné à détecter un changement de position de la courroie de presse (34) en direction de l'une des parois latérales (57),
au moins un élément d'actionnement (100) qui est disposé sous la forme d'un bras pivotant (102) et d'un coulisseau (120) pouvant coulisser linéairement, qui relie fonctionnellement le capteur (98, 132) à la courroie de presse (34) et qui coopère avec le capteur (98, 132),
l'élément d'actionnement (100), monté sur une partie formant cadre de la presse à balles rondes (10), pouvant être amené en engagement direct ou indirect avec un bord périphérique (108) de la courroie de presse (34),
et un déplacement, détectable par le capteur (98, 132), de l'élément d'actionnement (100) pouvant être généré par un changement de position de la courroie de presse (34),
**caractérisé en ce que** l'élément d'actionnement (100) comprend un rouleau de guidage (106) qui peut rouler sur le bord périphérique (108) et qui est disposé à une extrémité libre pivotante du bras pivotant (102) ou à une extrémité libre coulissante du coulisseau (120),
et **en ce que** l'élément d'actionnement (100) peut être déplacé contre une première butée (116) et une deuxième butée (118), lesquelles butées (116, 118) sont réalisées sous la forme d'extrémités d'une gorge de guidage (107, 123), linéaire ou en forme d'arc de cercle, qui est ménagée dans la partie formant cadre réalisée sous la forme d'une traverse (86), à travers laquelle gorge le un axe de guidage (104), reliant le bras pivotant (102) au rouleau de guidage (106), ou une tige de guidage (122), guidant le coulisseau (120) dans la gorge de guidage (123), s'étend et est appliqué dans ses positions extrêmes, le capteur (98, 132) étant disposé du côté de la traverse (86) qui est opposé à la courroie de presse (34) .

2. Presse à balles rondes (10) selon la revendication 1, **caractérisée en ce que** l'élément d'actionnement (100) comprend un dispositif de précontrainte (112) qui agit en direction de la courroie de presse (34), l'élément d'actionnement (100) pouvant être précontraint en direction de la courroie de presse (34).

3. Combinaison d'un véhicule agricole (8) et d'une presse à balles rondes (10) selon l'une des revendications précédentes 1 ou 2.

4. Combinaison selon la revendication 3, comprenant un dispositif de présentation qui permet de présenter sous forme visible et/ou audible un signal qui peut être délivré par le capteur (98, 132) dans le véhicule (8).

5. Combinaison selon la revendication 3 ou 4, **caractérisé en ce qu'**un signal, qui peut être délivré par le capteur (98, 132), représente une grandeur de commande destinée à un dispositif de direction de véhicule qui fonctionne automatiquement en fonction du signal.
